(19) Europäisches Patentamt
European Patent Office
Office européen des brevets

(11) Veröffentlichungsnummer: **0 087 713**
**B1**

(12) # EUROPÄISCHE PATENTSCHRIFT

(45) Veröffentlichungstag der Patentschrift: **08.01.86**

(51) Int. Cl.⁴: **C 09 B 67/22**, C 09 D 11/02, C 09 D 1/00

(21) Anmeldenummer: **83101640.7**

(22) Anmeldetag: **21.02.83**

(54) **Neue Zubereitungen von Phthalocyaninen und deren Verwendung.**

(30) Priorität: **02.03.82 DE 3207330**

(43) Veröffentlichungstag der Anmeldung: **07.09.83 Patentblatt 83/36**

(45) Bekanntmachung des Hinweises auf die Patenterteilung: **08.01.86 Patentblatt 86/2**

(84) Benannte Vertragsstaaten: **CH DE FR GB IT LI**

(56) Entgegenhaltungen:
**EP - A - 0 061 623**
**DE - B - 1 029 965**
**FR - A - 2 281 409**

(73) Patentinhaber: **BASF Aktiengesellschaft, Carl-Bosch-Strasse 38, D-6700 Ludwigshafen (DE)**

(72) Erfinder: **Patsch, Manfred, Dr., Fritz-Wendel-Strasse 4, D-6706 Wachenheim (DE)**
Erfinder: **Ruske, Manfred, Merziger Strasse 10, D-6700 Ludwigshafen (DE)**
Erfinder: **Hahn, Erwin, Dr., Am Buechsenackerhang 31, D-6900 Heidelberg (DE)**

**EP 0 087 713 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung betrifft neue Zubereitungen von Phthalocyaninen und deren Verwendung.

Druckfarben und Lackfarben sind Bindemittel und weitere Hilfsmittel enthaltende Dispersionen von Pigmenten. Das rheologische Verhalten dieser Farben wird zu einem wesentlichen Teil durch das Pigment bestimmt. So liegen in zähen (dicken), praktisch nicht mehr fliessfähigen oder thixotropen Farben das bzw. die Pigmente praktisch vollständig bis zu einem erheblichen Anteil in geflockter Form vor. Solche Farben geben — neben dem nachteiligen Fliessverhalten — farbschwache und weniger glänzende Färbungen als Farben, in denen das Pigment nicht geflockt ist.

Leichter anwendbare Farben können zwar erhalten werden, wenn der Pigmentgehalt verringert wird. Dies ist jedoch in vielen Fällen, z.B. bei Druckfarben, nicht erwünscht.

Aus der Literatur sind bereits Zusätze für Pigmente bekannt, welche eine Flockung der Pigmente in Druck- und Lackfarben vermindern oder sogar ganz verhindern sollen.

Aus der DE-PS 1 228 014 sind flockungsbeständige und lösungsmittelechte Phthalocyaninzubereitungen bekannt, die als Stabilisierungsmittel Phthalocyaninsulfonsäureamide der Formel

$$Pc\text{-}(SO_2NH\text{-}R^1\text{-}A\text{-}R^2)_n$$

enthalten, in der Pc den n-wertigen Rest eines Phthalocyanins, $R^1$ einen divalenten und $R^2$ einen monovalenten linearen oder verzweigten aliphatischen oder cycloaliphatischen Rest mit zusammen mindestens 4 C-Atomen, A ein Sauerstoffatom oder eine >NH-Gruppe und n eine Zahl von 1 bis 4 bedeuten.

Aus den GB-PS 949 737, 985 620 und 972 805 sind nicht flockende Phthalocyaninzubereitungen bekannt, die als stabilisierend wirkendes Mittel Phthalocyaninverbindungen der Formel

$$Pc\text{-}(CH_2\text{-}N{<}^{R^1}_{R^2})_m$$

enthalten, in der PC einen m-wertigen Phthalocyaninrest, $R^1$ und $R^2$ unabhängig voneinander Wasserstoff und nicht substituierte oder substituierte aliphatische oder cycloaliphatische Reste oder

$-N{<}^{R^1}_{R^2}$ einen heterocyclischen Rest

und m eine Zahl von 1 bis 5 bedeuten. Auch in diesen Zubereitungen ist das Phthalocyaninpigment in nichtwässrigen Medien wie Lackfarben gegen Flokkung und Kristallisation stabil.

Weiterhin sind aus DE-OS 2 500 509 u.a. Kupferphthalocyaninzubereitungen bekannt, die als stabilisierend wirkendes Mittel

$-CH_2\text{-}NHCO\text{-}CH_2\text{-}N{<}^{R}_{R}$ -Gruppen tragendes Kupferphthalocyanin enthalten. Nach den Angaben auf Seite 8, Absatz 2 ist das Pigment in diesen Zubereitungen gegen Kristallwachstum und Umwandlung der Kristallform in aromatischen Lösungsmitteln bei Temperaturen bis zu 160°C geschützt. Ausserdem sind die Pigmente in diesen Zubereitungen in nichtwässrigen Medien wie Lacken oder Tiefdruckfarben gegen Flockung stabil.

Mit diesen Zubereitungen erhält man Lacke und Druckfarben mit zufriedenstellendem Fliessverhalten.

Aufgabe der vorliegenden Erfindung war es, Phthalocyaninzubereitungen zu entwickeln, die in Druck- und Lackfarben verbesserte Eigenschaften wie verbessertes Fliess- und Flockungsverhalten und verbesserte Säureechtheiten aufweisen.

Es wurde gefunden, dass Phthalocyaninzubereitungen mit verbesserten coloristischen und anwendungstechnischen Eigenschaften vorliegen, wenn die Zubereitungen

(a) ein feinteiliges Phthalocyaninpigment und

(b) mindestens eine Phthalocyaninverbindung der Formel

$$Pc\text{-}(CH_2\text{-}NH\text{-}\underset{\underset{O}{\|}}{C}\text{-}(CH_2)_z\text{-}\overset{\oplus}{N}{\begin{smallmatrix} \diagup R^1 \\ \text{—}R^2 \\ \diagdown R^3 \end{smallmatrix}})_n \; (X^{\ominus})_n \qquad (I)$$

enthalten, in der

Pc für einen n-wertigen Phthalocyaninrest, der gegebenenfalls bis zu 2 Chloratome enthält,

$R^1$ und $R^2$ unabhängig voneinander für $C_2$- bis $C_6$-Alkyl oder $C_2$- bis $C_4$-Hydroxyalkyl,

$R^3$ für $C_1$- bis $C_{14}$-Alkyl, $C_2$- bis $C_4$-Hydroxyalkyl, 2-Hydroxy-3-chlorpropyl oder Benzyl,

$X^{\ominus}$ für ein Äquivalent eines Anions,

z für 1 oder 2 und

n für 1, 2, 3 oder 4 stehen.

Mit den neuen Zubereitungen erhält man Druck- und Lackfarben mit deutlich verbessertem Fliessverhalten und Flockungsverhalten. Die mit diesen Farben erhaltenen Überzüge weisen hervorragende Milchsäureechtheit auf.

So zeigen z.B. Verpackungsdruckfarben mit Nitrocellulose als Bindemittel, welche die erfindungsgemässen Zubereitungen enthalten, eine hervorragende Echtheit gegenüber Milchsäure auf. Es tritt kein Ausbluten auf. Gleichzeitig weisen die Farben gutes Fliessverhalten und die Pigmente gutes Flockungsverhalten auf.

Die Milchsäureechtheit ist für Verpackungsdruckfarben von grosser Bedeutung, da diese Farben zum Bedrucken von Papier, Aluminiumfolien, Zellglas und Kunststoffolien verwendet werden, welche zur Verpackung von Nahrungsmitteln dienen. Hierbei würde ein Ausbluten bzw. ein Anbluten der verpackten Ware eine Verwendung der Farben für diesen Zweck ausschliessen.

Die Zubereitungen gemäss der Erfindung können durch Mischen des feinteiligen Pigments (a) mit der PC-Verbindung (b) der Formel I hergestellt werden. Das Mischen kann z.B. durch gemeinsames Mahlen der Komponenten erfolgen.

Die Zubereitung kann auch durch Behandeln der wässrigen Pigmentsuspension mit einer Lösung des Mittels (b) und Abtrennen des Pigments enthalten werden.

Die Zubereitung kann auch durch Formierung des Rohpigments in Gegenwart der Mittel (b) oder durch gemeinsames Anreiben von Pigment (a) und Mittel (b) in für Druck- und/oder Lackfarben geeigneten Bindemitteln oder Bindemittellösungen hergestellt werden. In allen Fällen erzielt man die gleichen vorteilhaften Wirkungen.

Die Menge an (b) ist vom Pc-Pigment (a) und von dem Mittel (b) abhängig. In der Regel beträgt die Menge an (b) mindestens 2 und bis zu 20 Gew.-%, bezogen auf (a). Vorzugsweise verwendet man 5 bis 15 Gew.-%, bezogen auf (a). Besonders bevorzugt sind Mengen an (b) von 5 bis 10 Gew.-%, bezogen auf (a), da mit diesen Mengen optimale Effekte erzielt werden.

Als Pc-Reste kommen solche des Nickel-, Cobalt-, Zink-, Aluminium- oder Eisenphthalocyanins, vorzugsweise des Kupferphthalocyanins (CuPc) in Betracht, wobei die Phthalocyanine bis zu 2 Chloratome im Molekül enthalten können. Als Phthalocyaninpigmente kommen vorzugsweise solche des CuPc wie die der α-, β-, γ-, δ- und der ε-Modifikation in Betracht.

Für $R^1$ und $R^2$ sind im einzelnen zu nennen: Ethyl, n-Propyl, i-Propyl, n- oder i-Butyl, Pentyl und Hexyl. Vorzugsweise stehen $R^1$ und $R^2$ für $C_3$- bis $C_5$-Alkyl, insbesondere für n-Propyl, n-Butyl und n-Pentyl.

Für $R^3$ kommen als $C_1$- bis $C_{14}$-Alkyl Methyl, Ethyl, Propyl, Butyl, Pentyl, Hexyl, Octyl, 2-Ethylhexyl, Nonyl, Decyl, als Hydroxypropyl und 2-Hydroxy-3--Chlorpropyl und Benzyl in Betracht. Von diesen sind 2-Hydroxyethyl, Methyl, Ethyl und Benzyl bevorzugt. Besonders bevorzugt sind Verbindungen der Formel I, in der Pc für einen Rest des Kupferphthalocyanins steht.

Für $X^\ominus$ sind zu nennen: $HO^\ominus$, $Cl^\ominus$, $CH_3COO^\ominus$, $C_2H_5\text{-}COO^\ominus$, $CH_3O\text{-}CH_2COO^\ominus$, Lactat sowie Benzolsulfonat, Toluolsulfonat, $CH_3OSO_3^\ominus$ und $H_5C_2\text{-}OSO_3^\ominus$.

z steht vorzugsweise für 1.

n ist eine der Zahlen 1, 2, 3 oder 4, vorzugsweise 1, 2 oder 3.

Da die als Ausgangsstoffe der zur Herstellung von I benötigten Verbindungen Gemische sind, liegen die Verbindungen I in der Regel als Gemische vor, so dass n eine gebrochene Zahl sein kann.

Bevorzugt sind Zubereitungen, die als (b) Verbindungen der Formel II

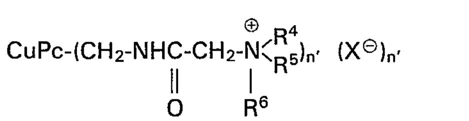 II

enthalten, in der

$R^4$ und $R^5$ für $C_3$- bis $C_5$-Alkyl, insbesondere für Propyl, n-Butyl oder n-Pentyl,

$R_6$ für 2-Hydroxyethyl, Methyl, Ethyl oder Benzyl,

n' für 1, 2 oder 3 und

$X^\ominus$ für ein Äquivalent eines Anions, vorzugsweise für $Cl^\ominus$, $HO^\ominus$, Acetat, Methoxyacetat oder Lactat stehen.

Als besonders wirksam hat sich die Verbindung II mit $R^4$ und $R^5$ = n-Butyl und $R^6$ = 2-Hydroxyethyl erwiesen.

Die Zubereitungen gemäss der vorliegenden Erfindung können neben (a) und (b) gegebenenfalls noch weitere in Pigmentzubereitungen übliche Mittel (c), wie Benetzungsmittel, entstaubend wirkende Mittel u.a. enthalten. Die Menge an solchen Mitteln wird so gering wie möglich bemessen und sollte 5 Gew.-%, bezogen auf die Zubereitung (a + b), nicht überschreiten. Vorzugsweise liegt der Anteil an (c), bezogen auf (a + b) unterhalb von 1 Gew.-%, insbesondere unterhalb von 0,2 Gew.-%.

Die vorliegende Erfindung soll durch die folgenden Beispiele weiter erläutert werden. Die Prozentangaben beziehen sich auf das Gewicht.

Die neuen Zubereitungen wurden in einer Nitrocellulose enthaltenden Druckfarbe geprüft.

1. Tiefdruckfarbe

1.1 In einen 300 $cm^3$ Becher aus Polyethylen wurde die 12 g Pigment entsprechende Menge der Zubereitung zu 138 g eines Nitrolacks und 300 g Stahlkugeln (2-3 mm ∅) gegeben. Der Becher wird auf einem Schüttelgerät (®RED DEVIL) 5 Min. geschüttelt (= Farbe 1).

1.2 Die Farbe wurde wie unter 1.1 hergestellt, jedoch wurde 30 Min. geschüttelt (= Farbe 2). Nach dem Abkühlen (Dauer: 1 h) werden die Kugeln von den Farben abgesiebt.

2. Herstellung der Färbung

Nach 18stündiger Lagerung werden die Farben mit einer 12 µm Spiralrakel (Fa. Erichsen) auf Illustriertenpapier und auf Aluminiumfolie abgezogen.

3. Prüfung auf Echtheit gegenüber Milchsäure

Ein Streifen der bedruckten/gefärbten Aluminiumfolie von 50 × 20 mm wird mit der bedruckten/gefärbten Seite auf ein auf einer Glasplatte befindliches Filterpapier gelegt, das mit 50%iger Milchsäure getränkt ist. Das Ganze wird mit einer zweiten Glasplatte zugedeckt, mit Ölpapier umhüllt und mit einem Gewicht von 1 kp belastet. Nach einer Lagerzeit von 24 h bei 20°C wird die Verfärbung des Filterpapiers gegen den Graumassstab (DIN 54 002) beurteilt. Zur Charakterisierung der Echtheit wurde das übliche Beurteilungsschema mit 5 Noten verwendet. Dabei bedeutet Note 5: kein Anbluten des weissen Filterpapiers (= sehr gute Echtheit) und Note 1: starkes Anbluten (= geringe Echtheit).

*Beispiel 1*

a) Zubereitung: 10, 8 Teile α-Kupferphthalocyaninpigment und 1,2 Teile Verbindung

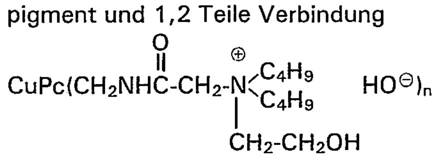

$\bar{n} = 1{,}4$

wurden durch Mahlen in einer Kaffeemühle homogen gemischt.

b) Nach den Angaben unter 1.2 wurde mit der nach a) erhaltenen Zubereitung eine NC-Tiefdruckfarbe hergestellt. Die mit der Farbe nach 2. erhaltenen Färbungen weisen hohe Farbstärke bei reinem Farbton und hohem Glanz auf. Die Druckfarbe zeigt gegenüber einer Druckfarbe, die nur mit dem Pigment hergestellt worden ist, ein verbessertes Fliessverhalten. Das Pigment ist in der Farbe gegen Flockung stabil.
Bei der Prüfung der Färbung auf Echtheit gegenüber Milchsäure nach 3. wurde das Filterpapier nicht angefärbt (Note 5).

*Beispiel 2*

a) Die Zubereitung wurde durch Mahlen von 11,28 Teilen ε-Kupferphthalocyaninpigment und 0,72 Teilen der in Beispiel 1a) angegebenen CuPc-Verbindung in einer Kaffeemühle hergestellt.

b) Mit der nach a) erhaltenen Zubereitung wurde nach 1.2 eine NC-Tiefdruckfarbe hergestellt. Die Farbe zeigt sehr gutes Fliessverhalten. Das Pigment ist gegen Flockung stabil.
Die mit der Farbe erhaltenen Drucke weisen sehr gute Echtheit gegenüber Milchsäure auf.

*Beispiel 3*

a) Zubereitung: 11,28 Teile β-Kupferphthalocyaninpigment und 0,72 Teile der Verbindung

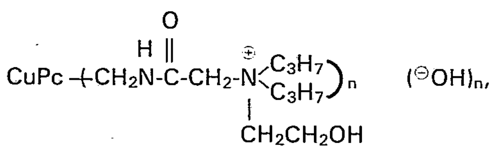

$\bar{n} = 1,5$

wurden durch Mahlen homogen gemischt.

b) Nach den Angaben unter 1.2 wurde mit der nach a) erhaltenen Zubereitung eine NC-Tiefdruckfarbe hergestellt, die in der Koloristik, dem Fliess- und Flockungsverhalten praktisch der mit der Pigmentzubereitung des Beispiels 1 erhaltenen Farbe entspricht. Auch die Milchsäureechtheit der Färbung entspricht der Echtheit der mit der Farbe des Beispiels 1b) erhaltenen Färbungen.

c) Praktisch gleich gute Ergebnisse wie nach b) werden erhalten, wenn man anstelle der Ammoniumbase das Chlorid, Acetat, Methoxyacetat oder das Lactat der unter a) angegebenen quaternären Ammoniumverbindung verwendet.

*Beispiel 4*

a) Zubereitung: 10,8 Teile β-Kupferphthalocyaninpigment und 1,2 Teile der Verbindung

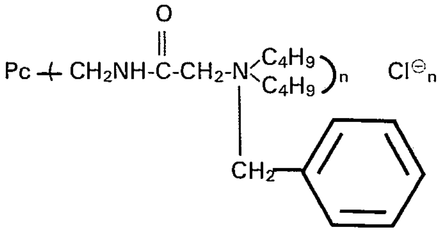

$\bar{n} = 1,2$

wurden durch Mahlen homogen gemischt.

b) Nach 1.2 wurde mit der Zubereitung aus a) eine NC-Tiefdruckfarbe hergestellt. Die mit der Farbe nach 2. hergestellten Färbungen weisen eine hohe Farbstärke auf.
Das Fiess- und Flockungsverhalten ist gegenüber einer mit dem Ausgangspigment allein hergestellten Druckfarbe verbessert.
Bei der Prüfung auf Echtheit gegenüber Milchsäure wurde kein Anfärben des Begleitmaterials festgestellt.

**Patentansprüche**

1. Zubereitungen von Phthalocyaninen, enthaltend
(a) ein feinteiliges Phthalocyaninpigment und
(b) mindestens eine Phthalocyaninverbindung der Formel

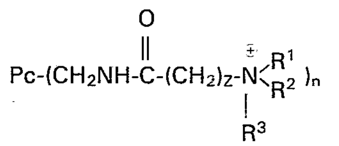

in der
Pc für einen n-wertigen Phthalocyaninrest, der bis zu 2 Chloratome enthalten kann,
$R^1$ und $R^2$ unabhängig voneinander für $C_2$- bis $C_6$-Alkyl oder $C_2$- bis $C_4$-Hydroxyalkyl,
$R_3$ für $C_1$- bis $C_{14}$-Alkyl, $C_2$- bis $C_4$-Hydroxyalkyl, 2-Hydroxy-3-chlorpropyl oder Benzyl,
$X^\ominus$ für ein Äquivalent eines Anions,
Z für 1 oder 2 und
n für 1, 2, 3 oder 4 stehen.

2. Zubereitung gemäss Anspruch 1, dadurch gekennzeichnet, dass die Zubereitung — bezogen auf (a) — 2 bis 20 Gew.-% an (b) enthält.

3. Zubereitung gemäss Anspruch 1 oder 2, dadurch gekennzeichnet, dass Pc ein Rest des Kupferphthalocyanins ist.

4. Zubereitung gemäss den Ansprüchen 1, 2 oder 3, dadurch gekennzeichnet, dass (a) ein Kupferphthalocyanin der α-, β-, γ-, δ- oder ε-Modifikation ist.

5. Zubereitung gemäss den Ansprüchen 1 bis 4, dadurch gekennzeichnet, dass (b) eine Verbindung der Formel

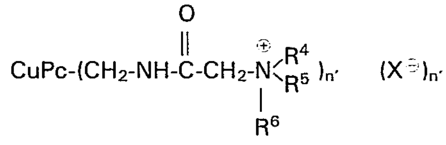

ist, in der CuPc für einen n'-wertigen Rest des Kupferphthalocyanins, $R^4$ und $R^5$ für $C_3$- bis $C_5$-Alkyl, $R^6$ für Methyl, Ethyl, 2-Hydroxyethyl oder Benzyl, n' für 1, 2 oder 3 und $X^\ominus$ für ein Äquivalent eines Anions stehen.

6. Zubereitung gemäss Anspruch 5, dadurch gekennzeichnet, dass $R^4$ und $R^5$ für n-Propyl, n-Butyl oder n-Pentyl stehen.

7. Zubereitung gemäss Anspruch 5, dadurch ge-

kennzeichnet, dass $R^4$ und $R^5$ für n-Butyl und $R^6$ für 2-Hydroxyethyl stehen.

8. Zubereitung gemäss den Ansprüchen 1 bis 7, dadurch gekennzeichnet, dass $X^{\ominus}$ für $HO^{\ominus}$, $Cl^{\ominus}$, Acetat, Methoxyacetat oder Lactat steht.

9. Zubereitung gemäss den Ansprüchen 1 bis 8, dadurch gekennzeichnet, dass diese noch (c) weitere in Pigmentzubereitungen übliche Mittel enthalten.

10. Verwendung der Zubereitungen gemäss den Ansprüchen 1 bis 9 zur Herstellung von Druck- und Lackfarben.

## Claims

1. A phthalocyanine formulation containing
(a) finely divided phthalocyanine pigment, and
(b) at least one phthalocyanine compound of the formula

$$Pc\text{-}\left(CH_2NH\text{-}\overset{\displaystyle O}{\overset{\|}{C}}\text{-}(CH_2)_Z\text{-}\underset{\displaystyle R^3}{\underset{|}{\overset{\oplus}{N}}}\begin{smallmatrix}R^1\\R^2\end{smallmatrix}\right)_n\quad(X^{\ominus})_n,$$

where
Pc is an n-valent phthalocyanine radical which may contain up to 2 chlorine atoms,
$R^1$ and $R^2$ independently of one another are $C_2$-$C_6$-alkyl or $C_2$-$C_4$-hydroxyalkyl,
$R^3$ is $C_1$-$C_{14}$-alkyl, $C_2$-$C_4$-hydroxyalkyl, 2-hydroxy-3-chloropropyl or benzyl,
$X^{\ominus}$ is an equivalent of an anion,
Z is 1 or 2, and
n is 1, 2, 3 or 4.

2. A formulation as claimed in claim 1, which contains — based on (a) — 2 to 20% by weight of (b).

3. A formulation as claimed in claim 1 or 2, wherein Pc is a copper phthalocyanine radical.

4. A formulation as claimed in claim 1, 2 or 3, wherein (a) is an α-, β-, γ-, δ- or ε-form copper phthalocyanine.

5. A formulation as claimed in claims 1 to 4, wherein (b) is a compound of the formula

$$CuPc\text{-}\left(CH_2\text{-}NH\text{-}\overset{\displaystyle O}{\overset{\|}{C}}\text{-}CH_2\text{-}\underset{\displaystyle R^6}{\underset{|}{\overset{\oplus}{N}}}\begin{smallmatrix}R^4\\R^5\end{smallmatrix}\right)_{n'}\quad(X^{\ominus})_{n'}$$

where CuPc is an n'-valent copper phthalocyanine radical,
$R^4$ and $R^5$ are each $C_3$-$C_5$-alkyl,
$R^6$ ist methyl, ethyl, 2-hydroxyethyl or benzyl,
n' is 1, 2 or 3, and
$X^{\ominus}$ is an equivalent of an anion.

6. A formulation as claimed in claim 5, wherein $R^4$ and $R^5$ are each n-propyl, n-butyl or n-pentyl.

7. A formulation as claimed in claim 5, wherein $R^4$ and $R^5$ are each n-butyl, and $R^6$ is 2-hydroxyethyl.

8. A formulation as claimed in claims 1 to 7, wherein $X^{\ominus}$ is $HO^{\ominus}$, $Cl^{\ominus}$, acetate, methoxyacetate or lactate.

9. A formulation as claimed in claims 1 to 8, which additionally contains further agents usually used in pigment formulations.

10. The use of a formulation as claimed in claims 1 to 9 for the production of printing inks and surface coatings.

## Revendications

1. Compositions de phtalocyanines contenant:
(a) un pigment de phtalocyanine finement divisé, et
(b) au moins une phtalocyanine répondant à la formule

$$Pc\text{-}\left(CH_2NH\text{-}\overset{\displaystyle O}{\overset{\|}{C}}\text{-}(CH_2)_Z\text{-}\underset{\displaystyle R^3}{\underset{|}{\overset{\oplus}{N}}}\begin{smallmatrix}R^1\\R^2\end{smallmatrix}\right)_n\quad(X^{\ominus})_n,$$

dans laquelle
Pc désigne un radical phtalocyanine n-valent, qui peut contenir jusqu'à 2 atomes de chlore,
$R^1$ et $R^2$ désignent indépentamment l'un de l'autre un radical alkyle en $C_2$-$C_6$ ou hydroxyalkyle en $C_2$-$C_4$,
$R^3$ désigne un radical alkyle en $C_2$-$C_{14}$, hydroxyalkyle en $C_2$-$C_4$, 2-hydroxy-3-chloropropyle ou benzyle,
$X^{\ominus}$ désigne un équivalent d'un anion,
Z est 1 ou 2, et
n est égal à 1, 2, 3 ou 4.

2. Préparation selon la revendication 1, caractérisée en ce que la préparation contient par rapport à (a), 2 à 20% en poids de (b).

3. Préparation selon la revendication 1 ou 2, caractérisée en ce que Pc est un radical de la phtalocyanine de cuivre.

4. Préparation selon les revendications 1, 2 ou 3, caractérisée en ce que (a) est une phtalocyanine de cuivre de la forme α, β, γ, δ ou ε.

5. Préparation selon les revendications 1 à 4, caractérisée en ce que (b) est un composé répondant à la formule

$$CuPc\text{-}\left(CH_2\text{-}NH\text{-}\overset{\displaystyle O}{\overset{\|}{C}}\text{-}CH_2\text{-}\underset{\displaystyle R^6}{\underset{|}{\overset{\oplus}{N}}}\begin{smallmatrix}R^4\\R^5\end{smallmatrix}\right)_{n'}\quad(X^{\ominus})_{n'}$$

dans laquelle CuPc désigne un radical n'-valent de la phtalocyanine de cuivre, $R^4$ et $R^5$ un radical alkyle en $C_3$-$C_5$, $R^6$ un radical méthyle, éthyle, 2-hydroxyéthyle ou benzyle, n' est égal à 1, 2 ou 3 et $X^{\ominus}$ est un équivalent d'un anion.

6. Préparation selon la revendication 5, caractérisée en ce que $R^4$ et $R^5$ désignent des radicaux n-propyle, n-butyle ou n-pentyle.

7. Préparation selon la revendication 5, caractéri-

sée en ce que $R^4$ et $R^5$ désignent un radical n-butyle et $R^6$ un radical 2-hydroxyéthyle.

8. Préparation selon les revendications 1 à 7, caractérisée en ce que $X^{\ominus}$ désigne $HO^{\ominus}$, $Cl^{\ominus}$, un anion acétate méthoxyacétate ou un lactate.

9. Préparation selon les revendications 1 à 8, caractérisée en ce que celle-ci contient en outre d'autres agents (c) habituels dans les préparations de pigments.

10. Utilisation des préparations selon les revendications 1 à 9, pour la préparation d'encre d'imprimerie et de peinture-émail.